# EUROPÄISCHE PATENTSCHRIFT

(11) **EP 1 881 315 B1**
(45) Veröffentlichungstag und Bekanntmachung des Hinweises auf die Patenterteilung: **30.12.2015**
(21) Anmeldenummer: 07108432.1
(22) Anmeldetag: 18.05.2007
(51) Int. Cl.: F02P 19/02, F23Q 7/00, G01L 23/22

(54) **Druckmesseinrichtung**
Pressure gauge device
Dispositif de mesure de la pression

(30) Priorität: 20.07.2006 DE 102006033638
(43) Veröffentlichungstag der Anmeldung: 23.01.2008
(73) Patentinhaber: ROBERT BOSCH GMBH, 70442 Stuttgart (DE)
(72) Erfinder: Kern, Christoph, 71546, Aspach (DE); Schott, Steffen, 71701, Schwieberdingen (DE); Saltikov, Pavlo, 71334, Waiblingen (DE)

(56) Entgegenhaltungen:
- EP-A2- 1 847 776
- DE-A1- 10 343 521
- DE-A1-102005 017 802

## Beschreibung

### Stand der Technik

Die Erfindung betrifft eine Druckmesseinrichtung zur Anordnung in einer Kammer einer Brennkraftmaschine. Speziell betrifft die Erfindung eine Druckmessglühkerze zur Anordnung in einer Brennkammer einer luftverdichtenden, selbstzündenden Brennkraftmaschine.

Aus der DE 103 43 521 A1 ist eine Druckmessglühkerze für einen Dieselmotor bekannt. Die bekannte Druckmessglühkerze weist einen Kerzenkörper zum Einsetzen in einen Zylinder des Dieselmotors und einen im Kerzenkörper angeordneten Heizstab auf. Außerdem ist ein Drucksensor zwischen dem Heizstab und dem Kerzenkörper derart angeordnet, dass der Drucksensor durch den Druck im Brennraum des Zylinders beeinflusst wird. Der Heizstab ist in axialer Richtung gleitend verschiebbar im Kerzenkörper angeordnet, wobei eine Membran oder ein O-Ring zum Abdichten des Kerzenkörpers vorgesehen ist.

Die aus der DE 103 43 521 A1 bekannte Druckmessglühkerze hat mehrere Nachteile. Die Ausgestaltung, bei der an der brennraumseitigen Stirnseite des Kerzenkörpers eine Membran angeordnet ist, hat den Nachteil, dass über die Membran ein Kraftnebenschluss gebildet ist, der die Druckmessung ungünstig beeinflusst. Bei thermisch bedingten Längenänderungen der Bauteile der Druckmessglühkerze variiert diese Beeinflussung außerdem, so dass die Druckmessung nicht zuverlässig ist. Bei einer Ausgestaltung, bei der ein O-Ring vorgesehen ist, besteht der Nachteil, dass dieser den heißen Verbrennungsgasen ausgesetzt ist, wodurch die Elastizität des O-Ringes über die Lebensdauer der Druckmessglühkerze abnimmt und somit die Zuverlässigkeit der Druckmessung über die Lebensdauer der Druckmessglühkerze nicht gegeben ist.

### Offenbarung der Erfindung

Vorteilhafte Wirkungen

Die erfindungsgemäße Druckmesseinrichtung mit den Merkmalen des Anspruchs 1 hat den Vorteil, dass die Zuverlässigkeit der durch das Dichtelement erzielten Abdichtung eines Innenraums der Druckmesseinrichtung auch bei hohen Temperaturen in der Kammer der Brennkraftmaschine gewährleistet ist, wodurch eine zuverlässige Druckmessung über die Lebensdauer der Druckmesseinrichtung ermöglicht ist.

Durch die in den Unteransprüchen aufgeführten Maßnahmen sind vorteilhafte Weiterbildungen der im Anspruch 1 angegebenen Druckmesseinrichtung möglich.

Das elastisch verformbare Dichtelement kann an eine Vielzahl von möglichen Anwendungen angepasst sein und dementsprechend an den jeweiligen Anwendungsfall angepasste Eigenschaften aufweisen und Funktionen erfüllen. Ein zuverlässiger Schutz des Dichtelementes kann dabei durch den Flammschild gewährleistet werden. Das elastisch verformbare Dichtelement, das insbesondere durch eine Elastomerdichtung gebildet sein kann, kann eine oder mehrere der folgenden Funktionen erfüllen. Das Dichtelement kann eine Abdichtung gegen die Einflüsse der Brennraummedien, z. B. gegen hohe Drucke oder einen Korrosionsangriff, eine elastische Rückfederung des Kraftpfades, eine Zentrierung des Kraftpfades, eine axiale Führung des Kraftpfades oder eine Dämpfung der Eigenschwingungen des Kraftübertragungskörpers, insbesondere des Glühstiftes, gewährleisten. Ferner kann das Dichtelement eine bessere Korrosionsbeständigkeit im Vergleich mit einer dünnwandigen Stahlmembran gewährleisten. Außerdem kann ein ungünstiger Thermoschockeffekt, der speziell bei der Verwendung einer Stahlmembran auftritt, ausgeschlossen werden. Das Dichtelement kann so ausgestaltet sein, dass der Kraftnebenschluss über das Dichtelement entfällt oder zumindest verringert ist. Außerdem kann das Dichtelement im Unterschied zu einer Stahlmembran, bei der zwei Festlager vorgesehen sind, mit nur einem Festlager befestigt werden, wodurch ein freier Längenausgleich der im Kraftpfad eingebauten Elemente ermöglicht ist, so dass der Vorteil einer Axialkraft- und Drehmomententkopplung des Kraftpfades speziell im Hinblick auf einen applikationsunabhängigen Kraftpfad beziehungsweise nur eine bestimmte Kennlinie des Drucksensors, der Vorteil einer gegebenenfalls nicht erforderlichen oder einfacher zu gewährleistenden Temperaturkompensation und der Vorteil einer geringeren Belastung des Kraftpfades speziell im Hinblick auf geringere Anforderungen an die Festigkeit der Bauteile besteht. Ferner können die Herstellungskosten einer Elastomerdichtung mit einer ringförmigen Geometrie im jeweiligen Anwendungsfall niedriger ausfallen als bei einer Stahlmembran, die sehr geringe Abmessungen, eine geringe Wandstärke und enge Toleranzen aufweisen muss. Ferner ist die Montage einer Elastomerdichtung in der Regel einfacher und billiger als eine aufwändige Montage der Stahlmembran, die mehrere Schweißverbindungen erforderlich macht. Außerdem kann durch die Elastomerdichtung eine Druckmesseinrichtung geschaffen werden, die einfacher einzubauen ist, da gegebenenfalls auf eventuelle Stauchungen des Gehäuses und dergleichen nicht Rücksicht genommen werden muss.

Vorteilhaft ist es, dass der Flammschild aus einem Werkstoff mit hoher Temperaturbeständigkeit gebildet ist. Speziell kann der Flammschild aus einem hochtemperaturbeständigen Kunststoff oder aus einer Zusammensetzung mit einem oder mehreren hochtemperaturbeständigen Kunststoffen bestehen. Ein solcher Kunststoff kann beispielsweise auf der Basis eines Polyether-Etherketons oder eines Polytetrafluorethylens gebildet sein. Dadurch kann eine hohe Temperaturbeständigkeit bis beispielsweise etwa 300°C und zusätzlich ein sehr gutes Hystereseverhalten erreicht werden. Die Dichtfunktion kann dabei zumindest im Wesentlichen, insbesondere auch vollständig, von dem Dichtelement übernommen werden, so dass gegebenenfalls über die Lebensdauer der Druckmesseinrichtung auftretende Verschlechterungen der Eigenschaften des Flammschildes, die durch die hohen Temperaturen bedingt sind, die Funktionsfähigkeit der Abdichtung des Innenraums der Druckmesseinrichtung nicht beeinträchtigen und somit eine hohe Zuverlässigkeit der Druckmessung über die Lebensdauer der Druckmesseinrichtung gewährleistet ist. Der Flammschild kann auch aus einem keramischen oder metallischen Werkstoff hergestellt sein oder als Verbundwerkstoff mehrerer unterschiedlicher Werkstoffe ausgestaltet sein.

In vorteilhafter Weise ist das Dichtelement aus einem Werkstoff mit hoher Temperaturbeständigkeit gebildet, der speziell aus einer Werkstoffklasse von Perfluorelastomeren sein kann. Dabei ist der Werkstoff des Dichtelements allerdings vorzugsweise in Bezug auf die auftretenden thermischen Belastungen, die durch den Flammschild verringert sind, angepasst ausgestaltet, um gegebenenfalls für eher niedrigere Temperaturen entwickelte Elastomere mit flexibleren Elementen in der Polymer-Hauptkette oder dergleichen, die eine hohe Elastizität zur Gewährleistung einer vorteilhaften Federungscharakteristik der Dichtung aufweisen, einzusetzen. Somit kann ein Dichtelement mit ausreichender Temperaturbeständigkeit gewählt werden, das auf Grund der gewährleisteten Elastizität der Dichtung den Einsatz eines entsprechend empfindlichen Drucksensors zur Erhöhung der Messgenauigkeit ermöglicht.

Um die Montage des Dichtelements und des Flammschildes zu erleichtern, ist das Gehäuse vorzugsweise mehrteilig ausgestaltet, wobei das Dichtelement und der Flammschild innerhalb eines rohrförmigen ersten Gehäuseteils angeordnet sind, das mit dem zweiten Gehäuseteil durch Laserschweißen verbunden sein kann. Je nach Montagesituation kann dabei die Dichtung radial und/oder axial dichten.

Vorzugsweise ist innerhalb des Gehäuses eine Stützplatte vorgesehen, an der sich das Dichtelement gegenüber dem Gehäuse, insbesondere einem innerhalb des Gehäuses ausgebildeten Absatz des Gehäuses, abstützt. Speziell bei Hochdruckanwendungen besteht in Bezug auf das Material des Dichtelementes gegebenenfalls eine hohe Extrusionsgefahr. Durch die Stützplatte, die insbesondere als Stützring ausgestaltet sein kann, wird eine solche Extrusion verhindert. Ferner kann das Dichtelement zum Verhindern einer Extrusion auch rohr- oder buchsenförmig ausgestaltet sein. Dadurch wird eine Verformung des Dichtelements überwiegend im Mittelbereich des Querschnitts erreicht, so dass extrusionskritische Bereiche des Dichtelements entlastet sind. Außerdem kann dadurch die kraftschlüssige Verbindung mit dem Kraftübertragungskörper über eine größere Kontaktfläche erfolgen.

### Kurze Beschreibung der Zeichnungen

Bevorzugte Ausführungsbeispiele der Erfindung sind in der nachfolgenden Beschreibung anhand der beigefügten Zeichnungen, in denen sich entsprechende Elemente mit übereinstimmenden Bezugszeichen versehen sind, näher erläutert. Es zeigt:
Fig. 1 ein erstes Ausführungsbeispiel einer erfindungsgemäßen Druckmesseinrichtung in einer schematischen Schnittdarstellung;
Fig. 2 den in Fig. 1 mit II bezeichneten Ausschnitt einer erfindungsgemäßen Druckmesseinrichtung gemäß einem zweiten Ausführungsbeispiel der Erfindung und
Fig. 3 den in Fig. 2 mit III bezeichneten Ausschnitt einer erfindungsgemäßen Druckmesseinrichtung gemäß einem dritten Ausführungsbeispiel der Erfindung.

### Ausführungsformen der Erfindung

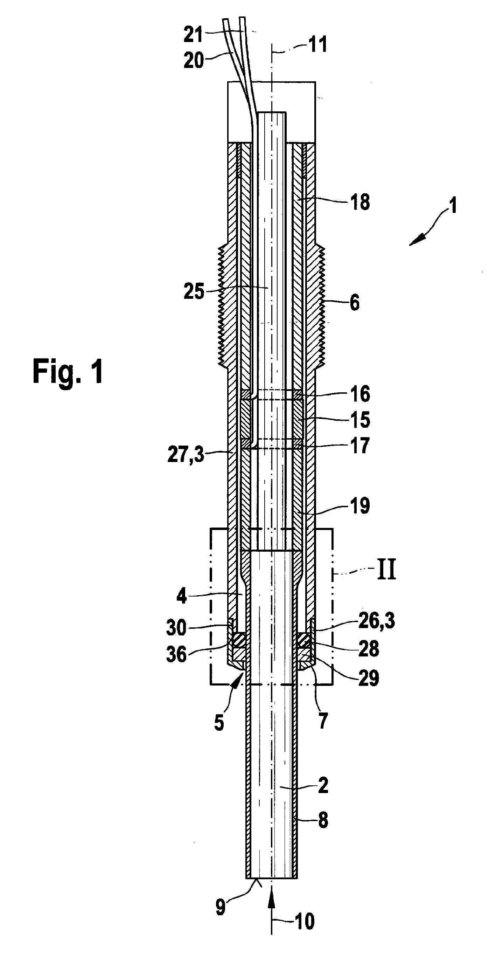

Fig. 1 zeigt ein erstes Ausführungsbeispiel einer Druckmesseinrichtung 1 in einer axialen Schnittdarstellung. Die Druckmesseinrichtung 1 ist dabei als Druckmessglühkerze 1 für eine luftverdichtende, selbstzündende Brennkraftmaschine ausgestaltet. Ein Kraftübertragungskörper 2, der in dem dargestellten Ausführungsbeispiel durch einen keramischen oder metallischen Glühstift gebildet ist, ragt bei Vor- und Wirbelkammermotoren in die Kammer der Brennkraftmaschine und bei Motoren mit Direkteinspritzung in eine Brennkammer des Motors. Die erfindungsgemäße Druckmesseinrichtung 1 eignet sich jedoch auch für andere Anwendungsfälle und kann insbesondere auch als Druckmesszündkerze oder Druckmesseinspritzventil für gemischverdichtende, fremdgezündete Brennkraftmaschinen ausgestaltet sein.

Die Druckmessglühkerze 1 weist ein metallisches Gehäuse 3 auf. Durch eine konzentrische Durchgangsbohrung des Gehäuses 3 ist ein Innenraum 4 des Gehäuses 3 gebildet. Der Glühstift 2 ist teilweise in dem Innenraum 4 angeordnet und ragt an einer kammerseitigen Öffnung 5 des Gehäuses 3 aus dem Gehäuse 3 in eine Brennkammer der Brennkraftmaschine. Zur Montage der Druckmessglühkerze 1 dient ein an dem Gehäuse 3 vorgesehenes Gewinde 6, mittels dem die Druckmessglühkerze in eine Gewindebohrung der Brennkraftmaschine einschraubbar ist, wobei durch einen an dem Gehäuse 3 ausgebildeten Dichtkonus 7 eine Abdichtung der Öffnung der Brennkraftmaschine gegenüber der Brennkammer erzielt ist.

Der Glühstift 2 weist ein Stützrohr 8 auf. Ein in der Brennkammer herrschender Druck wirkt auf eine Stirnfläche 9 des Glühstiftes 2 ein, wodurch eine Kraft 10 in Richtung einer Achse 11 der Druckmessglühkerze 1 auf den Glühstift 2 einwirkt. Zur Bestimmung des in der Brennkammer herrschenden Druckes ist ein Drucksensor 15 vorgesehen, der die Kraft 10 misst. Der Drucksensor 15 ist in dem Innenraum 4 des Gehäuses 3 angeordnet. Dabei ist der Drucksensor 15 zwischen Kontaktringen 16, 17, die zur Kontaktierung des vorzugsweise piezoelektrischen Drucksensors 15 dienen, angeordnet. Über den Kontaktring 16 stützt sich der Drucksensor 15 an einem mit dem Gehäuse 3 verbundenen Fixierelement 18 ab. Außerdem steht der Drucksensor 15 über den Kontaktring 17 und eine Kraftübertragungshülse 19 mit dem Glühstift 2 in Wirkverbindung. Die Kontaktringe 16, 17, das Fixierelement 18 und die Kraftübertragungshülse 19 sind dabei in dem Innenraum 4 des Gehäuses 3 angeordnet. Die Kraft 10 überträgt sich über den Glühstift 2, die an dem Glühstift 2 anliegende Kraftübertragungshülse 19 und den zwischen der Kraftübertragungshülse 19 und dem Drucksensor 15 angeordneten Kontaktring 17 auf den Drucksensor 15. Dabei wird in Abhängigkeit von der Kraft 10 eine gewisse piezoelektrische Ladung von dem Drucksensor 15 erzeugt, die über mit den Kontaktringen 16, 17 verbundene Messleitungen 20, 21 messbar ist.

Ferner ist eine vorzugsweise zumindest etwas flexibel ausgestaltete Glühstromleitung 25 in den Innenraum 4 geführt, um die zum Ausheizen des Glühstiftes 2 erforderliche Energie zuzuführen.

Das Gehäuse 3 weist einen rohrförmigen ersten Gehäuseteil 26 und einen zweiten Gehäuseteil 27 auf. Der Dichtkonus 7 ist dabei an dem ersten Gehäuseteil 26 ausgebildet. Ferner ist der erste Gehäuseteil 26 auf geeignete Weise, insbesondere durch Laserschweißen, mit dem zweiten Gehäuseteil 27 verbunden. Durch die mehrteilige Ausgestaltung des Gehäuses 3 ist die Montage der Druckmesseinrichtung 1 vereinfacht.

Innerhalb des ersten Gehäuseteils 26 ist ein elastisch verformbares Dichtelement 28 vorgesehen, das den Innenraum 4 des Gehäuses 3 gegenüber der kammerseitigen Öffnung 5 abdichtet, um eine Abdichtung gegenüber dem Brennraum der Brennkraftmaschine zu erzielen. Ferner ist innerhalb des ersten Gehäuseteils 26 ein Flammschild 29 vorgesehen, der zwischen dem Dichtelement 28 und der Öffnung 5 angeordnet ist. Der Flammschild 29 ist in Bezug auf die kammerseitige Öffnung 5 des Gehäuses 3 somit vor dem Dichtelement 28 angeordnet, um das Dichtelement 28 in Bezug auf eine von der Brennkammer ausgehende Hitzeeinwirkung zu schützen. Beispielsweise können erhitzte Gase an der kammerseitigen Öffnung 5 in das Gehäuse 3 eindringen. Der Flammschild 29 bewirkt, dass die durch die heißen Gase bedingte chemische und physikalische Belastung des Dichtelementes 28 zumindest reduziert ist.

Das Dichtelement 28 ist kraftschlüssig mit dem Stützrohr 8 des Glühstiftes 2 verbunden. Hierzu kann das Dichtelement 28 durch Aufweiten auf das Stützrohr 8 aufgepresst werden.

Der Flammschild 29 ist aus einem Werkstoff mit hoher Temperaturbeständigkeit gebildet. Hierbei eignet sich insbesondere ein Werkstoff auf der Basis eines Polyether-Etherketons oder eines Polytetrafluorethylens. Da durch den Flammschild 29 die thermische Belastung auf das Dichtelement 28 reduziert ist, kann das Dichtelement 28 in Abhängigkeit von dem jeweiligen Anwendungsfall aus einem Werkstoff gebildet sein, der zwar eine ausreichende Temperaturbeständigkeit gewährleistet aber dennoch eine möglichst hohe Elastizität des Dichtelementes 28 ermöglicht.

Der zweite Gehäuseteil 27 des Gehäuses 3 weist einen Absatz 30 mit einer Stirnseite 36 auf, an der sich das Dichtelement 28 zur Seite des Innenraums 4 hin abstützt. Im Betrieb der Druckmessglühkerze 1 können thermische Längenänderungen der Bauteile der Druckmessglühkerze 1 auftreten. Hierbei gewährleistet die elastische Ausgestaltung des Dichtelements 28 einen gewissen Temperaturausgleich, so dass eine zuverlässige Druckmessung gewährleistet ist. Ferner wird die durch den Druck in der Brennkammer bewirkte Kraft 10 auf Grund der elastischen Ausgestaltung des Dichtelementes 28 zumindest im Wesentlichen über das Stützrohr 8 und die Kraftübertragungshülse 19 auf den Drucksensor 15 übertragen, ohne dass es zu einem Kraftnebenschluss über das Gehäuse 3 kommt.

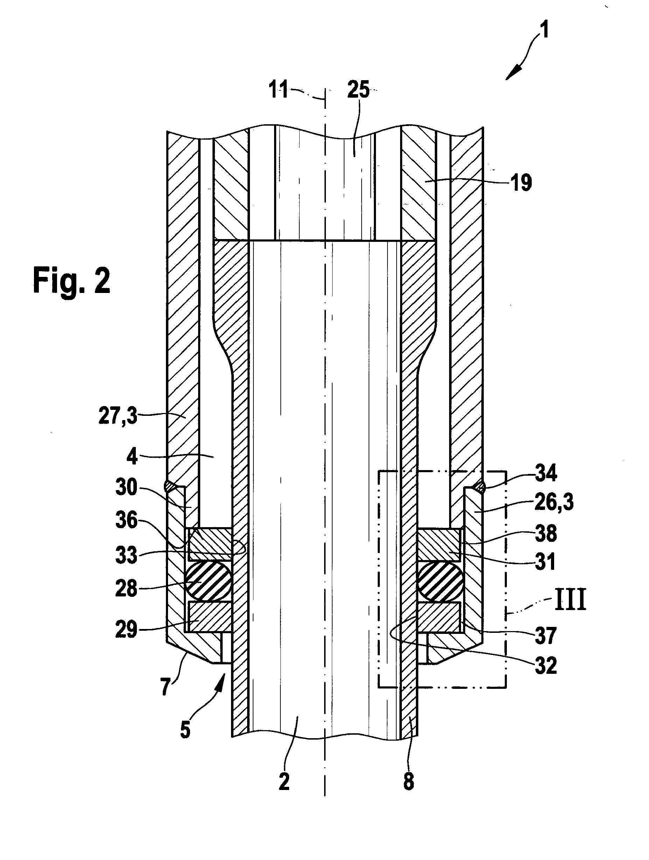

Fig. 2 zeigt den in Fig. 1 mit II bezeichneten Ausschnitt einer Druckmessglühkerze 1 gemäß einem zweiten Ausführungsbeispiel der Erfindung. Die Druckmesseinrichtung 1 dieses Ausführungsbeispiels weist eine Stützplatte 31 auf, die innerhalb des ersten Gehäuseteils 26 des Gehäuses 3 angeordnet ist. Die Stützplatte 31 ist außerdem zwischen dem Absatz 30 des zweiten Gehäuseteils 27 und dem Dichtelement 28 angeordnet. Das Dichtelement 28 stützt sich über die Stützplatte 31 an dem Absatz 30 des zweiten Gehäuseteils 27 ab. Die Stützplatte 31 kann entsprechend dem Flammschild 29 ausgebildet sein und insbesondere eine dem Flammschild 29 entsprechende Geometrie aufweisen oder aus einem ähnlichen oder dem gleichen Werkstoff wie der Flammschild 29 gebildet sein.

Der Flammschild 29 und die Stützplatte 31 sind jeweils plattenförmig ausgestaltet, wobei der Flammschild 29 eine durchgehende Aussparung 32 aufweist und die Stützplatte 31 eine durchgehende Aussparung 33 aufweist. Das Stützrohr 8 erstreckt sich durch die durchgehende Aussparung 32 des Flammschildes 29 als auch durch die durchgehende Aussparung 33 der Stützplatte 31.

Das zwischen dem Flammschild 29 und der Stützplatte 31 angeordnete Dichtelement 28 weist einen in Umfangsrichtung gesehenen kreisförmigen Querschnitt auf, so dass das Dichtelement 28 O-ringförmig ausgestaltet ist.

Durch die Stützplatte 31 wird eine vorteilhafte Abstützung des Dichtelementes 28 an dem Absatz 30 des zweiten Gehäuseteils 27 ermöglicht. Speziell wird die Anlagefläche, mit der sich das Dichtelement 28 an der Stützplatte 31 abstützt, gegenüber einer direkten Abstützung an dem Absatz 30 verbessert, so dass eine Beschädigung des Dichtelementes 28 verhindert und ein Extrudieren des Dichtelements 28 in den Innenraum 4 des Gehäuses 3 verhindert ist. Die Abdichtung des Innenraums 4 gegenüber der kammerseitigen Öffnung 5 ist somit durch die Zusammenwirkung des Flammschildes 29 mit dem Dichtelement 28 und der Stützplatte 31 mit hoher Zuverlässigkeit über die Lebensdauer der Druckmessglühkerze 1 gewährleistet. In Anwendungsfällen, in denen beispielsweise über das erste Gehäuseteil 26 des Gehäuses 3 oder über das Stützrohr 8 eine gewisse Wärmebelastung auf die Stützplatte 31 einwirkt, ist eine Ausgestaltung der Stützplatte 31 aus einem Werkstoff mit hoher Temperaturbeständigkeit entsprechend der Ausgestaltung des Flammschildes 29 von Vorteil. Das erste Gehäuseteil 26 ist mit dem zweiten Gehäuseteil 27 beispielsweise mittels einer durch Schweißen, insbesondere durch Laserschweißen, hergestellten umlaufenden Schweißnaht 34 verbunden.

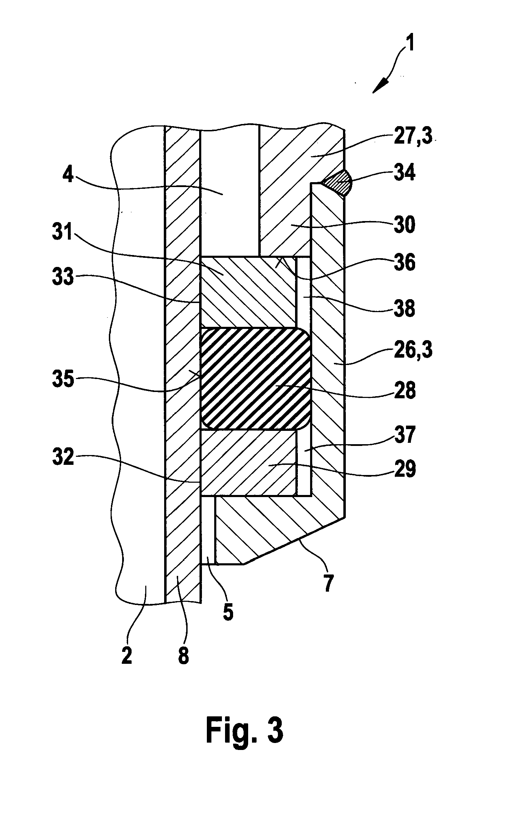

Fig. 3 zeigt den in Fig. 2 mit III bezeichneten Ausschnitt einer Druckmesseinrichtung 1 entsprechend einem dritten Ausführungsbeispiel der Erfindung. In diesem Ausführungsbeispiel weist das Dichtelement 28 in Umfangsrichtung gesehen einen im Wesentlichen rechteckigen, insbesondere quadratischen, Querschnitt auf, so dass sich sowohl in Bezug auf den Flammschild 29 als auch in Bezug auf die Stützplatte 31 eine relativ große Anlagefläche ergibt. Ferner ergibt sich eine relativ große Verbindungsfläche 35 zwischen dem Dichtelement 28 und dem Stützrohr 8 des Glühstiftes 2. Dadurch ist die kraftschlüssige Verbindung zwischen dem Dichtelement 28 und dem Stützrohr 8 weiter verbessert, wobei insbesondere die Abdichtung des Innenraums 4 des Gehäuses 3 gegenüber der kammerseitigen Öffnung 5 und somit gegenüber der Brennkammer verbessert ist.

Durch die Ausgestaltung des Dichtelements 28 mit einem in Umfangsrichtung zumindest näherungsweise rechteckigen Querschnitt ist das Dichtelement 28 als rohr- oder buchsenförmiges Dichtelement 28 ausgestaltet. Dabei ergibt sich bei einem rohrförmigen Dichtelement 28 eine weiter vergrößerte Verbindungsfläche 35, wodurch eine verstärkte Dichtwirkung erzielt ist.

Das Dichtelement 28 hat nach innen einen Kontakt mit dem Stützrohr 8 und nach außen einen Kontakt mit dem ersten Gehäuseteil 26 des Gehäuses 6. Somit liegt es sowohl am Stützrohr 8 als auch am Gehäuseteil 26 des Gehäuses 6 an, um beiderseits eine Abdichtung auszubilden. Allerdings ist der Flammschild 29 beabstandet zu dem Glührohr 8 oder zu dem Gehäuseteil 26 angeordnet, so dass zumindest zu dem Glührohr 8 oder dem Gehäuseteil 26 kein direkter Kontakt besteht. Dadurch wird ein Reibungseinfluß verhindert. Entsprechend ist auch die Stützplatte 31 etwas beabstandet zu dem Glührohr 8 oder dem Gehäuseteil 26 angeordnet.

In Fig. 2 und Fig. 3 sind Ausgestaltungen dargestellt, bei denen sowohl der Flammschild 29 als auch die Stützplatte 31 durch einen Ringspalt 37 beziehungsweise einen Ringspalt 38 vom Gehäuseteil 26 des Gehäuses 3 getrennt sind.

Die Erfindung ist nicht auf die beschriebenen Ausführungsbeispiele beschränkt.

## Patentansprüche

1. Druckmesseinrichtung (1) zur Anordnung in einer Kammer einer Brennkraftmaschine, insbesondere Druckmessglühkerze für eine luftverdichtende, selbstzündende Brennkraftmaschine, mit einem Gehäuse (3), einem Kraftübertragungskörper (2), der an einer kammerseitigen Öffnung (5) des Gehäuses (3) teilweise aus dem Gehäuse (3) ragt, und mit einem Drucksensor (15), der in einem Innenraum (4) des Gehäuses (3) angeordnet ist und zumindest mittelbar mit dem Kraftübertragungskörper (2) in Wirkverbindung steht, wobei zumindest ein elastisch verformbares Dichtelement (28) vorgesehen ist, das innerhalb des Gehäuses (3) angeordnet ist und den Innenraum (4) des Gehäuses (3) gegenüber der kammerseitigen Öffnung (5) des Gehäuses (3) abdichtet, und wobei ein Flammschild (29) vorgesehen ist, der zum Schutz des Dichtelements (28) gegenüber einer kammerseitigen Hitzeeinwirkung dient, **dadurch gekennzeichnet, dass** das Gehäuse (3) einen rohrförmigen ersten Gehäuseteil (26) aufweist, an dem die kammerseitige Öffnung (5) ausgebildet ist, dass das Dichtelement (28) und der Flammschild (29) innerhalb des rohrförmigen ersten Gehäuseteils (26) angeordnet sind, und dass das Dichtelement (28) zumindest mittelbar an einem durch eine Stirnseite eines zweiten Gehäuseteils (27) gebildeten Absatz (30) abgestützt ist, wobei das Dichtelement (28) aus einem Werkstoff mit hoher Temperaturfestigkeit aus einer Werkstoffklasse von Perfluorelastomeren gebildet ist.

2. Druckmesseinrichtung nach Anspruch 1, **dadurch gekennzeichnet, dass** der Flammschild (29) aus einem Werkstoff mit hoher Temperaturbeständigkeit gebildet ist.

3. Druckmesseinrichtung nach Anspruch 2, **dadurch gekennzeichnet, dass** der Flammschild (29) aus einem Werkstoff auf der Basis eines Polyether-Etherketons und/oder Polytetrafluorethylens gebildet ist.

4. Druckmesseinrichtung nach einem der Ansprüche 1 bis 3, **dadurch gekennzeichnet, dass** das Dichtelement (28) kraftschlüssig mit dem Kraftübertragungskörper (2) verbunden ist.

5. Druckmesseinrichtung nach einem der Ansprüche 1 bis 4, **dadurch gekennzeichnet, dass** innerhalb des Gehäuses (3) ein Absatz (30) ausgebildet ist und dass das Dichtelement (28) an dem Absatz (30) abgestützt ist.

6. Druckmesseinrichtung nach Anspruch 5, **dadurch gekennzeichnet, dass** innerhalb des Gehäuses (3) eine Stützplatte (31) vorgesehen ist und dass das Dichtelement (28) über die Stützplatte (31) an dem innerhalb des Gehäuses (3) ausgebildeten Absatz (30) abgestützt ist.

7. Druckmesseinrichtung nach Anspruch 6, **dadurch gekennzeichnet, dass** der Hammschild (29) innerhalb des Gehäuses (3) angeordnet ist und dass das Dichtelement (28) zwischen dem Flammschild (29) und der Stützplatte (31) angeordnet Ist.

8. Druckmesseinrichtung nach einem der Ansprüche 1 bis 7, **dadurch gekennzeichnet, dass** der Flammschild (29) als plattenförmiger Flammschild (29) ausgestaltet ist, dass der Flammschild (29) eine durchgehende Aussparung (32), insbesondere eine mittige Durchgangsbohrung, aufweist und dass sich der Kraftübertragungskörper (2) durch die durchgehende Aussparung (32) des Flammschildes (29) erstreckt.

9. Druckmesseinrichtung nach Anspruch 8, **dadurch gekennzeichnet, dass** der rohrförmige erste Gehäuseteil (26) mit dem zweiten Gehäuseteil (27) durch Schweißen, insbesondere durch Laserschweißen, verbunden ist.

10. Druckmesseinrichtung nach einem der Ansprüche 1 bis 9, **dadurch gekennzeichnet, dass** das Dichtelement (28) als rohr- oder buchsenförmiges Dichtelement (28) ausgestaltet ist.

## Claims

1. Pressure gauge device (1) for arrangement in a chamber of an internal combustion engine, in particular pressure measuring glow plug for an air-compressing, autoignition internal combustion engine, having a housing (3), a force-transmitting body (2) which partially projects out of the housing (3) at a chamber-side opening (5) of the housing (3), and having a pressure sensor (5) which is arranged in an interior space (4) of the housing (3) and is operatively connected at least indirectly to the force-transmitting body (2), where at least one elastically deformable sealing element (28) is provided which is arranged inside the housing (3) and seals off the interior space (4) of the housing (3) with respect to the chamber-side opening (5) in the housing (3), and wherein a flame plate (29), which serves to protect the sealing element (28) from a chamber-side heating effect, is provided, **characterized in that** the housing (3) has a tubular first housing part (26) in which the chamber-side opening (5) is formed, **in that** the sealing element (28) and the flame plate (29) are arranged inside the tubular first housing part (26), and **in that** the sealing element (28) is supported at least indirectly on a shoulder (30) which is formed by an end side of a second housing part (27), wherein the sealing element (28) is formed from a material with a high temperature resistance comprised of a material class of perfluoroelastomers.

2. Pressure gauge device according to Claim 1, **characterized in that** the flame plate (29) is formed from a material with a high temperature resistance.

3. Pressure gauge device according to Claim 2, **characterized in that** the flame plate (29) is formed from a material based on a polyether-ether ketone and/or polytetrafluoroethylene.

4. Pressure gauge device according to one of Claims 1 to 3, **characterized in that** the sealing element (28) is connected in a frictionally locking fashion to the force-transmitting body (2).

5. Pressure gauge device according to one of Claims 1 to 4, **characterized in that** a shoulder (30) is formed within the housing (3), and **in that** the sealing element (28) is supported on the shoulder (30).

6. Pressure gauge device according to Claim 5, **characterized in that** a support plate (31) is provided inside the housing (3), and **in that** the sealing element (28) is supported via the support plate (31) on the shoulder (30) which is formed inside the housing (3).

7. Pressure gauge device according to Claim 6, **characterized in that** the flame plate (29) is arranged inside the housing (3), and **in that** the sealing element (28) is arranged between the flame plate (29) and the support plate (31).

8. Pressure gauge device according to one of Claims 1 to 7, **characterized in that** the flame plate (29) is configured as a plate-shaped flame plate (29), **in that** the flame plate (29) has a continuous cutout (32), in particular a central drilled-through hole, and **in that** the force-transmitting body (2) extends through the continuous cutout (32) in the flame plate (29).

9. Pressure gauge device according to Claim 8, **characterized in that** the tubular first housing part (26) is connected to the second housing part (27) by welding, in particular by laser welding.

10. Pressure gauge device according to one of Claims 1 to 9, **characterized in that** the sealing element (28) is configured as a sealing element (28) in the form of a tube or bushing.

## Revendications

1. Dispositif de mesure de pression (1) destiné à être disposé dans une chambre de moteur à combustion interne, en particulier bougie de mesures de pression pour un moteur à combustion interne à auto-allumage et compression d'air, comprenant un boîtier (3), un corps de transfert de force (2) qui sort partiellement hors du boîtier (3) au niveau d'une ouverture (5) du boîtier (3) du côté de la chambre, et un capteur de pression (15) qui est disposé dans un espace interne (4) du boîtier (3) et qui est en liaison fonctionnelle au moins de manière indirecte avec le corps de transfert de force (2), au moins un élément d'étanchéité déformable élastiquement (28) étant prévu, lequel est disposé à l'intérieur du boîtier (3) et étanchéifie l'espace interne (4) du boîtier (3) par rapport à l'ouverture (5) du boîtier (3) du côté de la chambre, et un pare-flamme (29) étant prévu, lequel sert à protéger l'élément d'étanchéité (28) contre l'effet de la chaleur du côté de la chambre, **caractérisé en ce que** le boîtier (3) présente une première partie de boîtier (26) de forme tubulaire au niveau de laquelle est réalisée l'ouverture (5) du côté de la chambre, **en ce que** l'élément d'étanchéité (28) et le pare-flamme (29) sont disposés à l'intérieur de la première partie de boîtier (26) de forme tubulaire, et **en ce que** l'élément d'étanchéité (28) est supporté au moins de manière indirecte au niveau d'un épaulement (30) formé par un côté frontal d'une deuxième partie de boîtier (27), l'élément d'étanchéité (28) étant formé d'un matériau ayant une haute résistance à la température, choisi dans une classe de matériau d'élastomères perfluorés.

2. Dispositif de mesure de pression selon la revendication 1, **caractérisé en ce que** le pare-flamme (29) est formé d'un matériau ayant une grande résistance à la température.

3. Dispositif de mesure de pression selon la revendication 2, **caractérisé en ce que** le pare-flamme (29) est formé d'un matériau à base de polyétheréthercétone et/ou de polytétrafluoréthylène.

4. Dispositif de mesure de pression selon l'une quelconque des revendications 1 à 3, **caractérisé en ce que** l'élément d'étanchéité (28) est connecté par engagement par force au corps de transfert de force (2).

5. Dispositif de mesure de pression selon l'une quelconque des revendications 1 à 4, **caractérisé en ce qu'**à l'intérieur du boîtier (3) est réalisé un épaulement (30) et **en ce que** l'élément d'étanchéité (28) est supporté contre l'épaulement (30).

6. Dispositif de mesure de pression selon la revendication 5, **caractérisé en ce qu'**à l'intérieur du boîtier (3) est prévue une plaque d'appui (31) et **en ce que** l'élément d'étanchéité (28) est supporté par le biais de la plaque d'appui (31) contre l'épaulement (30) réalisé à l'intérieur du boîtier (3).

7. Dispositif de mesure de pression selon la revendication 6, **caractérisé en ce que** le pare-flamme (29) est disposé à l'intérieur du boîtier (3) et **en ce que** l'élément d'étanchéité (28) est disposé entre le pare-flamme (29) et la plaque d'appui (31).

8. Dispositif de mesure de pression selon l'une quelconque des revendications 1 à 7, **caractérisé en ce que** le pare-flamme (29) est réalisé sous forme de pare-flamme (29) en forme de plaque, **en ce que** le pare-flamme (29) présente un évidement continu (32), en particulier un alésage traversant central et **en ce que** le corps de transfert de force (2) s'étend à travers l'évidement continu (32) du pare-flamme (29).

9. Dispositif de mesure de pression selon la revendication 8, **caractérisé en ce que** la première partie de boîtier (26) de forme tubulaire est connectée à la deuxième partie de boîtier (27) par soudage, en particulier par soudage laser.

10. Dispositif de mesure de pression selon l'une quelconque des revendications 1 à 9, **caractérisé en ce que** l'élément d'étanchéité (28) est réalisé sous forme d'élément d'étanchéité (28) en forme de tube ou de douille.
